# EUROPÄISCHE PATENTSCHRIFT

(11) **EP 0 353 609 B1**
(45) Veröffentlichungstag und Bekanntmachung des Hinweises auf die Patenterteilung: **02.03.1994**
(21) Anmeldenummer: 89113756.4
(22) Anmeldetag: 26.07.1989
(51) Int. Cl.: A22C 13/00

(54) **Schlauchförmige Verpackungshülle auf Basis von Cellulose mit textilartiger Struktur**
Tube-shaped wrapping based on cellulose with a textile structure
Gaine tubulaire d'emballage à base de cellulose à structure textile

(30) Priorität: 05.08.1988 DE 3826616
(43) Veröffentlichungstag der Anmeldung: 07.02.1990
(73) Patentinhaber: HOECHST AKTIENGESELLSCHAFT, 65926 Frankfurt am Main (DE)
(72) Erfinder: Siebrecht, Manfred, Dr., D-6200 Wiesbaden (DE); Hammer, Klaus-Dieter, Dr., D-6500 Mainz 1 (DE)

(56) Entgegenhaltungen:
- EP-A- 267 489
- EP-A- 0 303 328
- CH-A- 662 543
- DE-A- 2 801 545
- DE-A- 3 018 861
- DE-A- 3 811 440
- DE-U- 1 951 899
- DE-U- 8 716 138
- DE-U- 8 804 123
- DE-U- 8 805 545
- US-A- 3 214 277

## Beschreibung

Die Erfindung bezieht sich auf eine schlauchförmige Verpackungshülle, insbesondere künstliche Wursthülle, auf Basis von Cellulose, welche textiles Flächengebilde enthält.

Es ist bekannt, schlauchförmige Verpackungshüllen aus Cellulose mit großem Durchmesser, insbesondere im Kaliberbereich von 30 bis 180 mm, mit einer schlauchförmig gebogenen Faserbahn zu verstärken, die auf der Innen- und/oder Außenseite mit Cellulose versehen ist. In der Praxis besteht diese Faserverstärkung bei nahtlosen Schlauchhüllen aus speziellen Langfaserpapieren auf Basis von adhäsiv verfestigten Faservliesstoffen aus wirr abgelegten Hanffasern. Als Bindemittel dienen Viskose und/oder vernetzte kationische Harze wie z.B. Epichlorhydrin-Polyaminpolyamid-Harze.

Zur Herstellung von Wursthüllen mit einer längsaxialen Klebenaht wurde in der EP-A-0 058 240 vorgeschlagen, anstelle der üblichen Faserverstärkung auch andere Flächengebilde, z.B. Gewebe oder Gewirke, zu verwenden. Nach den Angaben dieser Druckschrift werden diese Stoffe in bahnförmigem Zustand mit Viskoselösung imprägniert und anschließend während der Regenerierung und dem Trocknen starken Querstreckkräften ausgesetzt.

Hierzu wird die viskosierte Faserbahn an den beiden Rändern z.B. mit Nadelwalzen, Greifkluppen oder Breitzugwalzen festgehalten und in Querrichtung gestreckt. Erst die fertiggestellte bahnförmige faserverstärkte Cellulose wird dann zu einem Schlauch geformt und die längsaxial sich erstreckenden Randbereiche mit einer Klebenaht verbunden. Diese Hüllen haben jedoch aufgrund verschiedener Nachteile gegenüber nahtlosen Schläuchen keinen Eingang in die Praxis gefunden.

In neuerer Zeit wurde aus rein dekorativen Gründen auf die Außenseite von nahtlosen faserverstärkten Wursthüllen auf Basis von Cellulose ein grobmaschiger Netzschlauch aufgebracht, welcher mit der Celluloseschicht verklebt wurde (DE-U-88 04 123.9, DE-U-8 805 545). Diese Hüllen geben der Wurst ein besonderes rustikales Aussehen. Ihre Herstellung ist allerdings relativ aufwendig. Darüber hinaus ist es auch bekannt, den Netzschlauch erst beim Füllvorgang auf die fertiggestellte Wurst aufzubringen (DE-U-88 06 038.1). Bei diesem Verfahren wird der Netzschlauch allerdings nicht auf der Wurstoberfläche fixiert. Er läßt sich dadurch leicht verschieben und kann sich beim Reifen der Wurst allmählich lockern.

Ausgehend von diesem Stand der Technik stellte sich die Aufgabe, den bekannten schlauchförmigen Verpackungshüllen auf Basis von Cellulose, insbesondere künstlichen Wursthüllen, wie sie beispielsweise für Dauerwurst oder Salamitypen bekannt sind, ein dekoratives, rustikales Aussehen zu verleihen. Die Aufgabe bestand ferner darin, eine Verpackungshülle aus Cellulose mit dekorativer Oberflächenstruktur anzugeben, die sich nach dem konventionellen Viskoseverfahren mit den dort üblichen Vorrichtungen auf einfache und wirtschaftliche Weise herstellen läßt.

Diese Aufgabe wird gelöst durch die Verpackungshülle mit den in Anspruch 1 genannten Merkmalen und durch das Verfahren mit den in Anspruch 11 angegebenen Verfahrensschritten. Die abhängigen Ansprüche geben Weiterbildungen der Hülle bzw. des Verfahrens an.
Nach der Erfindung wird anstelle von oder zusätzlich zu einer üblichen Faserverstärkung ein textiles Flächengebilde in Form eines Gewebes, Gewirkes oder Geleges in der nahtlosen Cellulosehülle verwendet. Gewebe und Gelege bestehen aus mindestens zwei sich rechtwinklig kreuzenden Fadensystemen, Gewirke oder Wirkwaren sind dagegen aus Maschen aufgebaut. Ein geeignetes Gewirke ist beispielsweise ein Netz, das aus einzelnen Maschen mit mehreckiger, vorzugsweise rautenförmiger, quadratischer oder sechseckiger Grundform aufgebaut ist. Die Fadensysteme des Gewebes bzw. die Maschen des Gewirkes sind aus einzelnen oder mehreren, gegebenenfalls miteinander verschlungenen Fäden aufgebaut, die Maschen sind z.B. geraschelt oder geklöppelt. Anstelle von Gewebe, Gewirke oder Gelege wird im folgenden der Einfachheit halber von textilen Flächengebilden gesprochen.

Das die Verstärkung der Hülle bildende textile Flächengebilde ist vorzugsweise in der Weise anzuordnen, daß die gewebte oder gewirkte Struktur auf der äußeren Hüllenoberfläche gut sichtbar wird. Für diesen Zweck sollte die Dicke der äußeren Celluloseschicht auf der Außenseite des schlauchförmigen verstärkten Materials kleiner als 100, insbesondere kleiner als 50 Mikrometer sein. Gewöhnlich ist sie geringer als die Dicke der inneren Celluloseschicht auf der Innenseite des schlauchförmigen verstärkten Materials. Dies kann auch durch das Dickenverhältnis dieser Celluloseschichten ausgedrückt werden, welches kleiner als 1 ist. Üblicherweise liegt das Dickenverhältnis der äußeren zur inneren Celluloseschicht im Bereich von 4 : 6 bis 1 : 9. Zwischen den einzelnen Fäden des textilen Flächengebildes befindet sich ebenfalls Cellulose, so daß die Fäden praktisch vollständig in die Celluloseschicht eingebettet sind. Durch die dünne, transparente äußere Celluloseschicht bleibt das textile Flächengebilde nicht nur sichtbar, in bevorzugter Ausführungsform verleiht es auch der äußeren Oberflächenschicht der Hülle seine gewebte oder gewirkte Struktur. Dadurch zeigt die Hülle und auch die fertiggestellte Wurst einen ungewöhnlichen textilartigen Oberflächeneffekt.

In einer Ausführungsvariante wird die übliche Faserverstärkung in Form von Langfaserpapier für die Schlauchhülle beibehalten. Es besitzt gewöhnlich ein Flächengewicht von 17 bis 28 g/m² und besteht aus Hanffasern.

Es ist aber auch möglich, einen verfestigten Vliesstoff mit einem niedrigeren Flächengewicht, insbesondere bis zu 10 g/m², insbesondere ein Papier, oder ein anderes Material, z.B. Cellulosefasern, zu verwenden, weil das textile Flächengebilde zur Schlauchfestigkeit beiträgt. Das textile Flächengebilde ist auf der äußeren Oberfläche des Vliesstoffs vorhanden und gegebenenfalls mit dieser verbunden, z.B. mit einem geeigneten Klebstoff kaschiert. Im einfachsten Fall nimmt man als Klebstoff Viskose, es können aber auch härtbare Aminoplastharze, mit Epichlorhydrin vernetzbare Verbindungen, Acrylat-, Polyvinylacetat- oder PVC-Dispersionen und andere bekannte Stoffe zum Verbinden der beiden Schichten verwendet werden. Die Verknüpfung der beiden Schichten ist ausreichend fest, wenn der mit Viskose beschichtete und imprägnierte Verbund den Fällvorgang übersteht, denn ab dann übernimmt die koagulierte Viskose bzw. die regenerierte Cellulose die Bindung.

In dieser Kombination mit dem Vliesstoff hat das textile Flächengebilde nur geringe verstärkende Wirkung für die Wandung der Verpackungshülle und hat in erster Linie die Funktion, der äußeren Hüllenoberfläche das textile Aussehen zu verleihen. Das textile Flächengebilde kann folglich relativ geringe Festigkeitseigenschaften aufweisen. Die Dicke der Fäden kann entsprechend verringert werden. Das Fadenmaterial umfaßt natürliche und synthetische Stoffe, z.B. Baumwolle, tierische Wolle, regenerierte Cellulose, Polyamid,

Polyester, Polyacrylnitril, Polypropylen und Glas. Das Flächengewicht des Verbundes aus textilem Flächengebilde und Vliesstoff beträgt 20 bis 400, insbesondere 30 bis 200 g/m².

In einer anderen Ausführungsform wird das textile Flächengebilde ohne weitere Faserverstärkung bzw. Vliesstoff eingesetzt und dient damit gleichzeitig zur Erhöhung der Festigkeit und des dekorativen Charakters der Hülle. Für diese Ausführungsform wird vorzugsweise ein Gewebe, Gewirke oder Gelege aus Cellulosefasern und gegebenenfalls zusätzlich synthetische Fasern wie Polyamid- und/oder Polyesterfasern eingesetzt. Das Mischungsverhältnis von Cellulosefasern zu synthetischen Fasern kann so eingestellt werden, daß die Cellulosefasern bis zu 80, insbesondere bis zu 60 % durch synthetische Fasern ersetzt sind.

Die Maschenweite bzw. der Abstand zwischen zwei benachbarten Fäden im textilen Flächengebilde kann in Abhängigkeit vom zu erzielenden Effekt frei gewählt werden, sollte jedoch aus Gründen der Festigkeitseigenschaften nicht über 20, insbesondere nicht über 10 mm betragen. Als unterer Grenzwert ist etwa 0,1, insbesondere 0,5 mm zu betrachten. Wird das textile Flächengebilde ohne Faserverstärkung bzw. Vliesstoff eingesetzt, liegt die Maschenweite bzw. der Fadenabstand bei maximal 6, insbesondere maximal 4 mm.

Auch der Durchmesser der einzelnen Fäden kann in Abhängigkeit von den gewünschten Festigkeitseigenschaften der Hülle und dem optischen Effekt in weiten Bereichen variiert werden und liegt im allgemeinen zwischen 20 und 500, insbesondere zwischen 80 und 300 Mikrometer.

Es ist auch möglich, verschiedene in Kette und Schuß gewebte Fäden im textilen Flächengebilde zu verwenden. So können die in Längsrichtung der schlauchförmigen Hülle sich erstreckenden Fäden eine geringere Dicke aufweisen, z.B. 60 bis 110 Mikrometer, als die in Querrichtung sich erstreckenden Fäden, die z.B. 120 bis 230 Mikrometer dick sind, oder aus einem anderen Material bestehen oder sonstige andere Eigenschaften aufweisen.

Das aus der Maschenweite bzw. dem Fadenabstand und der Fadenstärke sich ergebende Flächengewicht des Gewebes, Geleges oder Gewirkes liegt gewöhnlich bei 10 bis 400, insbesondere 25 bis 200 g/m², die Dicke liegt vor dem Beschichten mit Viskose im Bereich von 80 bis 600, insbesondere 100 bis 400 Mikrometer.

Die Herstellung der Verpackungshülle erfolgt nach dem üblichen Viskoseprozeß zur Herstellung nahtloser faserverstärkter Schläuche. Das bahnförmige Gelege, Gewebe oder Gewirke, gegebenenfalls in Form eines Verbundes mit einer üblichen Faserverstärkung oder einem verfestigten Vliesstoff, wird zu einem Schlauch geformt, wobei sich die längsaxialen Ränder überlappen.

Im allgemeinen wird eine etwas breitere Überlappung gewählt als sie bei der Herstellung von faserverstärkten schlauchförmigen Cellulosehüllen üblich ist. Sie liegt gewöhnlich bei 3 bis 10 mm oder 5 bis 15 % des Schlauchumfangs.

Bei der Verwendung eines Verbundes aus textilem Flächengebilde und Faserverstärkung bzw. Vliesstoff wird der Schlauch in der Weise geformt, daß das textile Flächengebilde die Schlauchaußenseite bildet.

Zum Verkleben der sich überlappenden Ränder des zu einem Schlauch gebogenen textilen Flächengebildes wird Viskose aus einer Düse in die Überlappungsnaht eingeführt. Der Schlauch wird dann auf seiner Innenseite und/oder Außenseite mit Viskose imprägniert und überzogen. Die auf der Außenseite aufgebrachte Viskosemenge wird so bemessen, daß die resultierende Celluloseschicht die Struktur des textilen Flächengebildes erkennen läßt. Bei beidseitiger Viskosierung wird die Viskose so verteilt, daß sich der überwiegende Anteil auf der Schlauchinnenseite befindet. Die Viskose dringt in die Zwischenräume zwischen den Fäden und überzieht die Fäden praktisch vollständig. Zur Viskosierung werden die üblichen Beschichtungsdüsen verwendet, wobei der Ringspalt infolge der größeren Dicke des textilen Flächenkörpers im Vergleich zu den bisherigen Faserverstärkungen entsprechend vergrößert werden muß.

Die Koagulation der Viskose mit saurer Fällflüssigkeit und ihre Überführung in regenerierte Cellulose erfolgt auf übliche Weise. Das aufgezeigte Verfahren läßt sich auf einfache Weise ohne große apparative Veränderungen oder zusätzliche Verfahrensschritte durchführen, da die übliche Faserverstärkung durch das textile Flächengebilde ersetzt oder mit diesem verbunden wird.

Die erhaltenen Schläuche zeigen je nach Dicke der äußeren Celluloseschicht eine mehr oder weniger stark strukturierte textilartige äußere Oberfläche entsprechend dem verwendeten textilen Flächengebilde. Die von den Fäden des Gewebes, Geleges bzw. Gewirkes gebildeten Erhebungen ragen bis zu etwa 0,3 mm, insbesondere bis zu 50 Mikrometer, aus der Schlauchoberfläche hervor. Das Flächengewicht der Verpackungshülle, gemessen bei einem Wassergehalt im Bereich von 10 bis 25 Gew.-% und einem Glyceringehalt von 18 bis 25 Gew.-%, bezogen jeweils auf das Gesamtgewicht der Hülle, liegt gewöhnlich im Bereich von 60 bis 600, vorzugsweise im Bereich von 100 bis 300 g/m² und hängt maßgeblich vom Gewicht des eingesetzten textilen Flächengebildes ab.

Die Hülle zeigt die üblichen Eigenschaften von faserverstärkten Cellulosehüllen, sie beeinträchtigt den Räucherprozeß und den Reifeprozeß nicht und schrumpft beim Lagern der Wurst mit der Wasser abgebenden Wurstmasse. Sie läßt sich deshalb besonders vorteilhaft als wasserdampfdurchlässige Wursthülle für alle Rohwursttypen verwenden.

Gegebenenfalls zeigt die Hülle eine übliche Beschichtung auf ihrer Innen- und/oder Außenoberfläche, z.B. eine Innenimprägnierung zur Erhöhung der Haftung zwischen Wurstmasse und der Cellulosewand oder zur Verbesserung des Schälverhaltens, eine Außenbeschichtung mit fungiciden Mitteln oder eine Barriereschicht, die beispielsweise den Durchtritt von Luftsauerstoff verhindert. Die Hülle läßt sich entweder als einseitig verschlossener Abschnitt oder in gerafftem Zustand als sogenannte Raupe mit Wurstmasse füllen, wobei die üblichen Füllvorrichtungen eingesetzt werden.

Die Erfindung wird durch die nachstehenden Beispiele näher erläutert.

### Beispiel 1

Eine 210 mm breite streifenförmige Bahn aus Langfaserpapier wird mit einem Klebstoff auf Basis von PVC einseitig mit einem Gewebe aus Polyesterfäden kaschiert. Die Fäden sind in Kette und Schuß gewebt und zeigen einen unregelmäßigen Abstand von 1 bis 6 mm. Die zweischichtige Bahn wird mit dem Gewebe auf der Außenseite zu einem Schlauch geformt und mit Viskosedüsen, wie sie aus der DE-C-19 65 130 bekannt sind, auf der Innen-und Außenseite mit Viskose imprägniert und beschichtet. Der Mengenanteil der Viskose beträgt 20 % auf der Außenseite, 80 % auf der Innenseite. Der innen und außen viskosierte Schlauch wird in üblicher Weise mit saurer Fällflüssigkeit behandelt und die Viskose in regenerierte Cellulose überführt. Nach dem Durchlaufen von üblichen Wasch- und Weichmacherbädern wird der Schlauch im aufgeblasenen Zustand getrocknet.

Die Hülle wird problemlos mit Wurstbrät vom Salamityp gefüllt, die erhaltene Wurst dem üblichen Reifeprozeß unterworfen. Das Gewebe ist auf der Oberfläche der fertiggestellten Wurst gut sichtbar und verleiht der Wurst das gewünschte Aussehen.

### Beispiel 2

Eine 210 mm breite streifenförmige Bahn aus einem Gewebe wird zu einem Schlauch geformt und auf der Innen- und Außenseite mit Viskose imprägniert und beschichtet. Das Gewebe besteht aus einem Gemisch von 80 % Baumwoll- und 20 % Polyamidfäden, die Fadendicke beträgt etwa 200 Mikrometer, das Flächengewicht 25 g/m², der Abstand der Kettfäden etwa 2 mm, der Abstand der Schußfäden etwa 1 bis 2 mm. Die Mengenverteilung der Viskose beträgt 70 % innen, 30 % außen. Der Schlauch wird wie üblich gefällt, regeneriert, gewaschen, weichgemacht und getrocknet.

Die Hülle wird mit Dauerwurstbrät auf ein Füllkaliber von 65 mm gefüllt. Der Verlauf des Reifeprozesses und der Schrumpf der Hülle beim Trocknen der Wurst während der Lagerung ist einwandfrei. An der fertigen Wurst ist das eingelagerte Gewebe gut sichtbar.

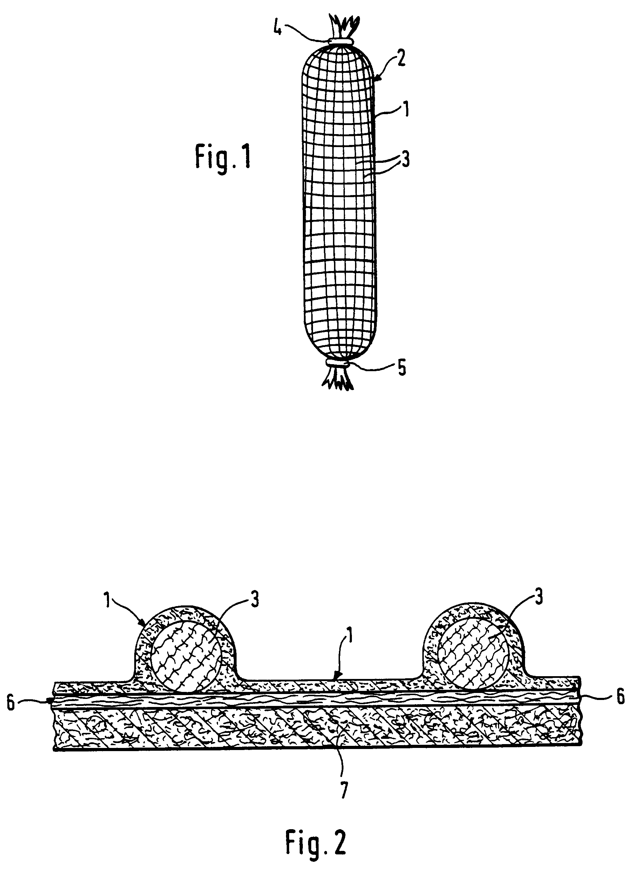

Die Erfindung wird durch die Fig. 1 und 2 näher erläutert. Es zeigt
Fig. 1 eine fertiggestellte Wurst mit einer Ausführungsform der Wursthülle,
Fig. 2 die Wursthülle im Schnitt in stark vergrößertem Maßstab.

In Fig. 1 sind durch die äußere Celluloseschicht 1 (Fig. 2) der Wursthülle 2 die Fäden 3 eines Gewebes deutlich erkennbar. Die Wurst ist an ihren Enden mit Metallclips 4 und 5 verschlossen. In Fig. 2 zeigt die Wursthülle 2 eine äußere Celluloseschicht 1, welche die Fäden 3 und einen Vliesstoff 6 aus Langfaserpapier umgibt. Auf der Rückseite des Vliesstoffs 6, welche die Innenwand der Schlauchhülle bildet, ist eine weitere, relativ dicke Celluloseschicht 7 vorhanden.

## Patentansprüche

1. Schlauchförmige Verpackungshülle, insbesondere künstliche Wursthülle, auf Basis von Cellulose, welche ein textiles Flächengebilde enthält, dadurch gekennzeichnet, daß das textile Flächengebilde aus einem Gewebe, Gewirke oder Gelege besteht, welches allseitig von Cellulose umgeben ist, wobei die äußere Celluloseschicht so bemessen ist, daß die Struktur des textilen Flächengebildes sichtbar ist.

2. Verpackungshülle nach Anspruch 1, dadurch gekennzeichnet, daß das Verhältnis der Dicke der Celluloseschicht auf der Außenseite des textilen Flächengebildes zur Dicke der Celluloseschicht auf der Innenseite des textilen Flächengebildes kleiner als 1 ist und vorzugsweise im Bereich von 4 : 6 bis 1 : 9 liegt.

3. Verpackungshülle nach Anspruch 1, dadurch gekennzeichnet, daß das Flächengewicht des textilen Flächengebildes 10 bis 400 g/m² beträgt.

4. Verpackungshülle nach einem der Ansprüche 1 bis 3, dadurch gekennzeichnet, daß das Flächengewicht der Verpackungshülle 60 bis 600 g/m² (gemessen bei einem Wassergehalt von 10 bis 25 Gew.-% und einem Glyceringehalt von 18 bis 25 Gew.-%, jeweils bezogen auf das Gesamtgewicht der Hülle) beträgt.

5. Verpackungshülle nach einem der Ansprüche 1 bis 4, dadurch gekennzeichnet, daß das textile Flächengebilde aus Cellulosefäden besteht, gegebenenfalls im Gemisch mit synthetischen Fäden, insbesondere aus Polyamid und/oder Polyester.

6. Verpackungshülle nach einem der Ansprüche 1 bis 5, dadurch gekennzeichnet, daß die äußere Celluloseschicht dünner ist als die Fäden im textilen Flächengebilde.

7. Verpackungshülle nach einem der Ansprüche 1 bis 6, dadurch gekennzeichnet, daß das textile Flächengebilde einen Fadenabstand bzw. eine Maschenweite von 0,5 bis 20, insbesondere 1 bis 6 mm aufweist.

8. Verpackungshülle nach einem der Ansprüche 1 bis 7, dadurch gekennzeichnet, daß die Dicke der Fäden im textilen Flächengebilde 20 bis 500, insbesondere 80 bis 300 Mikrometer beträgt.

9. Verpackungshülle nach einem der Ansprüche 1 bis 8, dadurch gekennzeichnet, daß das textile Flächengebilde mit einem verfestigten Vliesstoff, insbesondere einem Langfaserpapier, verbunden ist, wobei der Vliesstoff die Innenseite dieses Verbundes bildet.

10. Verpackungshülle nach Anspruch 9, dadurch gekennzeichnet, daß das Flächengewicht des Verbundes aus textilem Flächengebilde und Vliesstoff 20 bis 400 g/m² beträgt.

11. Verfahren zur Herstellung einer Verpackungshülle nach einem der Ansprüche 1 bis 10 nach dem Viskoseprozeß, wobei man eine bahnförmige Verstärkung zu einem Schlauch mit längsaxial sich überlappenden Rändern formt und diese Ränder miteinander verbindet, das nun schlauchförmige Flächengebilde auf seiner Innen- und/oder auf seiner Außenseite mit Viskose beschichtet und imprägniert und die Viskose in regenerierte Cellulose überführt, dadurch gekennzeichnet, daß die Verstärkung ein textiles Flächengebilde ist und aus einem Gewebe, Gewirke oder Gelege besteht und daß der Gewichtsanteil der auf die Außenseite des textilen Flächengebildes aufgebrachten Viskose so gering ist, daß die Außenseite der fertiggestellten Verpackungshülle die Struktur des textilen Flächengebildes aufweist.

12. Verfahren nach Anspruch 11, dadurch gekennzeichnet, daß das textile Flächengebilde mit einem verfestigten Vliesstoff verbunden ist, welcher bei der Bildung der Schlauchform die Innenseite bildet.

## Claims

1. Tubular packaging casing, in particular artificial sausage casing, based on cellulose and containing a textile sheet-shaped structure, characterized in that the textile sheet-shaped structure comprises a woven fabric, knitted fabric or scrim which is completely surrounded by cellulose, the outer cellulose layer being so dimensioned that the texture of the textile sheet-shaped structure is visible.

2. A packaging casing as claimed in claim 1, characterized in that the ratio between the thickness of the cellulose layer on the outside of the textile sheet-shaped structure and the thickness of the cellulose layer on the inside of the textile sheet-shaped structure is below 1 and is preferably in the range from 4:6 to 1:9

3. A packaging casing as claiemd in claim 1, characterized in that the weight per unit area of the textile sheet-shaped structure is 10 to 400 g/m².

4. A packaging casing as claimed in any one of claims 1 to 3, characterized in that the weight per unit area of the packaging casing is 60 to 600 g/m² (measured at a water content of 10 to 25 % by weight and a glycerol content of 18 to 25 % by weight, each based on the total weight of the casing).

5. A packaging casing as claimed in any one of claims 1 to 4, characterized in that the textile sheet-shaped structure is made of cellulose threads, if required in a blend with synthetic threads comprising, in particular, a polyamide and/or a polyester.

6. A packaging casing as claimed in one of claims 1 to 5, characterized in that the outer cellulose layer is thinner than the threads in the textile sheet-shaped structure.

7. A packaging casing as claimed in any one of claims 1 to 6, characterized in that the textile sheet-shaped structure shows a thread spacing or a mesh width of 0.5 to 20 mm, in particular 1 to 6 mm.

8. A packaging casing as claimed in any one of claims 1 to 7, characterized in that the thickness of the treads in the textile sheet-shaped structure is 20 to 500 µm, in particular 80 to 300 µm.

9. A packaging casing as claimed in any one of claims 1 to 8, characterized in that the textile sheet-shaped structure is bonded to a consolidated non-woven, in particular a long-fibered paper, the non-woven forming the inside of this composite.

10. A packaging casing as claimed in claim 9, characterized in that the weight per unit area of the composite comprising textile sheet-shaped structure and non-woven is 20 to 400 g/m².

11. A process for the production of a packaging casing as claimed in any one of claims 1 to 10 according to the viscose process, comprising bending a web-shaped reinforcement to form a tube the edges of which overlap in the direction of its longitudinal axis and joining these edges to one another, coating and impregnating the now tubular sheet-shaped structure on its inside and/or outside with viscose and converting the viscose into regenerated cellulose, characterized in that the reinforcement is a textile sheet-shaped structure which comprises a woven fabric, knitted fabric or scrim and that the amount by weight of viscose applied to the outside of the textile sheet-shaped structure is so small that the outside of the final packaging casing shows the texture of the textile sheet-shaped structure.

12. A process as claimed in claim 11, characterized in that the textile sheet-shaped structure is bonded to a consolidated non-woven which forms the inside in the process of forming the tube.

## Revendications

1. Enveloppe d'emballage tubulaire, notamment une enveloppe artificielle pour saucisse, à base de cellulose, contenant une structure textile bidimensionnelle, caractérisée en ce que la structure textile bidimensionnelle comprend un tissu, un tricot ou un canevas léger qui est revêtu de tout côté par de la cellulose, la couche de cellulose externe étant dimensionnée de telle sorte que la texture de la structure textile bidimensionnelle soit visible.

2. Enveloppe d'emballage selon la revendication 1, caractérisée en ce que le rapport de l'épaisseur de la couche de cellulose sur l'extérieur de la structure textile bidimensionnelle à l'épaisseur de la couche de cellulose sur l'intérieur de la structure textile bidimensionnelle est inférieur à 1 et est de préférence compris entre 4:6 et 1:9.

3. Enveloppe d'emballage selon la revendication 1, caractérisée en ce que le poids par unité de surface de la structure textile bidimensionnelle est compris entre 10 et 400 g/m².

4. Enveloppe d'emballage selon l'une quelconque des revendications 1 à 3, caractérisée en ce que le poids par unité de surface de l'enveloppe d'emballage est compris entre 60 et 600 g/m² (mesuré avec une teneur en eau comprise entre 10 et 25% en poids et avec une teneur en glycérol comprise entre 18 et 25% en poids; chacune de ces teneurs étant basées sur le poids total de l'enveloppe).

5. Enveloppe d'emballage selon l'une quelconque des revendications 1 à 4, caractérisée en ce que la structure textile bidimensionnelle est constituée de fils de cellulose, éventuellement en mélange avec des fils synthétiques, notamment en polyamide et/ou en polyester.

6. Enveloppe d'emballage selon l'une quelconque des revendications 1 à 5, caractérisée en ce que la couche externe de cellulose est plus mince que les fils dans la structure textile bidimensionnelle.

7. Enveloppe d'emballage selon l'une quelconque des revendications 1 à 6, caractérisée en ce que la structure textile bidimensionnelle présente un espace de fils ou une ouverture de maille compris entre 0,5 et 20 mm, en particulier entre 1 et 6 mm.

8. Enveloppe d'emballage selon l'une des revendications 1 à 7, caractérisée en ce que l'épaisseur des fils dans la structure textile bidimensionnelle est comprise entre 20 et 500 µm, en particulier entre 80 et 300 µm.

9. Enveloppe d'emballage selon l'une des revendications 1 à 8, caractérisée en ce que la structure textile bidimensionnelle est liée à un non-tissé renforcé, en particulier un papier à fibres longues, le non-tissé formant l'intérieur de ce composite.

10. Enveloppe d'emballage selon la revendication 9, caractérisée en ce que le poids par unité de surface du composite comprenant la structure textile bidimensionnelle et le non-tissé est compris entre 20 et 400 g/m².

11. Procédé de préparation d'une enveloppe d'emballage selon l'une quelconque des revendications 1 à 10, d'après le procédé viscose, dans lequel on forme une armature en forme de bande en un tube dont les bords se recouvrent dans la direction de son axe longitudinal et on joint ces bords l'un à l'autre, on revêt et imprégne cette structure tubulaire bidimensionnelle ainsi obtenue sur son intérieur et/ou son extérieur avec de la viscose et on convertit la viscose en de la cellulose régénérée, caractérisé en ce que l'armature est une structure textile bidimensionnelle et comprend un tissu, un tricot ou un canevas léger et en ce que la teneur en poids de viscose appliquée à l'extérieur de la structure bidimensionnelle est si petite que l'extérieur de l'enveloppe d'emballage finale laisse apparaître la texture de la structure textile bidimensionnelle.

12. Procédé selon la revendication 11, caractérisé en ce que la structure textile bidimensionnelle est liée à un non-tissé renforcé qui forme l'intérieur du tube lors de la formation de celui-ci.
